# DEMANDE DE BREVET EUROPEEN

(11) **EP 2 270 722 A1**
(43) Date de publication de la demande: **05.01.2011**
(21) Numéro de dépôt: 10151717.5
(22) Date de dépôt: 26.01.2010
(51) Int. Cl.: G06Q 10/00, G08B 21/12

(54) **Dispositif de collecte et de traitement d'informations relatives à l'exposition d'une ou plusieurs personnes à un ou plusieurs produits d'origine chimique ou biologique et procédé d'utilisation d'un tel dispositif**

(30) Priorité: 01.07.2009 FR 0903221
(71) Demandeur: Biogemma, 75001 Paris (FR)
(72) Inventeur: Hatsch, Didier, 63200 Riom (FR); Perez, Pascual, 63450 Chanonat (FR)
(74) Mandataire: Colombet, Alain André

(57) **Abrégé**

Un dispositif de collecte et de traitement d'informations relatives à l'exposition d'une ou plusieurs personnes (3) à un ou plusieurs produits d'origine chimique ou biologique, comporte :
- au moins un capteur codé (4) d'identification automatique ou semi-automatique d'une personne (3) susceptible d'être exposée à au moins un produit,
- au moins un capteur codé (40) de collecte d'informations relatives à la manipulation d'au moins un produit par la personne (3) susceptible d'être exposé au produit,
- au moins un capteur (41) de validation des informations collectées par les capteurs (4, 40) d'identification et de collecte,
- au moins un module de lecture (5) d'au moins un capteur codé (4, 40),
- un module de traitement des informations (12) collectées par les capteurs (4, 40 à 44).

## Description

L'invention a trait à un dispositif de collecte et de traitement d'informations relatives à l'exposition d'une ou plusieurs personnes à un ou plusieurs produits, d'origine chimique ou biologique. L'invention concerne également un procédé d'utilisation d'un tel dispositif.

L'évolution de la réglementation en matière de produits utilisés dans les industries et les laboratoires induit que chaque personne ayant utilisé un produit, notamment lorsque celui-ci est considéré comme dangereux, soit suivie afin d'être à même de collecter un minimum d'informations sur son exposition à ce produit. En particulier, le décret français n °2003-1254, du 23 décembre 2003, indique que les personnes exposées aux produits chimiques ou biologiques potentiellement dangereux doivent être suivies et que, pour chacune de ces personnes, il existe une fiche contenant au minimum le nom de l'utilisateur, la nature ainsi que la quantité du produit utilisé, la fréquence d'exposition et l'exposition totale aux produits.

Par produits, on désigne soit des produits d'origine chimique, par exemple des acides, des bases, des solvants, des sels, des produits radioactifs, des gaz ou des produits d'origine biologique, par exemple des cultures bactériennes, virales, humaines, végétales ou des composés moléculaires issus d'organismes vivants tels des toxines ou des hormones. Les données ainsi collectées permettent de suivre, sur le plan sanitaire, une personne et, avantageusement, de réaliser l'historique de son exposition aux différents produits.

Actuellement, dans certaines entreprises ou laboratoires, il existe une base de données interne répertoriant l'ensemble des produits utilisés dans l'entreprise ou le laboratoire. Cette base de données comporte, en général, l'ensemble des protocoles impliquant ces produits, c'est-à-dire, pour une manipulation donnée et standardisée, les quantités mises en oeuvre de produits identifiés. Il n'en demeure pas moins que chaque utilisateur doit effectuer, régulièrement, une saisie manuelle des informations le concernant. Ces informations viennent incrémenter une fiche de suivi individuel. La saisie manuelle des informations prend du temps, est potentiellement une source d'erreur et ne permet pas de limiter les risques de falsification des informations saisies.

On connaît, par US-A-2004/0002160, une méthode de gestion de l'exposition des personnes à des gaz dangereux. Cette méthode permet une localisation, par infrarouges, d'une personne, plus précisément d'un capteur porté par la personne. Ce capteur est de type chimique, réagissant à la présence d'un gaz donné. Le dispositif permet d'émettre un message d'alerte en cas de dépassement d'un seuil donné. On peut également faire des statistiques et/ou l'historique des expositions, pour une personne, à un gaz donné. L'une des limitations de cette technique est qu'un capteur ne détecte qu'un gaz donné. De plus, ces capteurs ne sont souvent que qualitatifs.

WO-A-2005/093680 permet, via un réseau de téléphonie mobile, d'effectuer un suivi et un contrôle d'une population, en particulier de détecter l'émission de radiations et d'en avertir la population. Ici également il s'agit d'une détection qualitative de produits donnés.

US-A-2004/0008115 décrit une méthode de gestion du temps d'exposition d'une ou de plusieurs personnes à des produits dangereux. Pour cela, un capteur, avantageusement, un capteur chimique est utilisé. Ce capteur est relié à un dispositif d'enregistrement du temps d'exposition.

Ces méthodes sont des méthodes d'alerte ou de collecte d'un temps d'exposition, dédiées à un ou, au mieux, à un nombre restreint de produits. En aucun cas, elles ne permettent de collecter l'ensemble des données relatives à l'exposition d'une personne à différents produits chimiques ou biologiques, quelle que soit leur forme, et de réaliser une fiche individuelle de suivi d'exposition.

C'est à ces inconvénients qu'entend plus particulièrement remédier l'invention en proposant un dispositif et son procédé d'utilisation, permettant, quels que soient les produits, d'origine chimique ou biologique, d'effectuer le suivi de l'exposition d'une ou plusieurs personnes à ces produits.

A cet effet, l'invention a pour objet un dispositif de collecte et de traitement d'informations relatives à l'exposition d'une ou plusieurs personnes à un ou plusieurs produits d'origine chimique ou biologique, comportant :
- au moins un capteur codé d'identification automatique ou semi automatique d'une personne susceptible d'être exposée à au moins un produit,
- au moins un capteur codé de collecte d'informations relatives à la manipulation d'au moins un produit par la personne susceptible d'être exposée au produit,
- au moins un capteur de validation des informations collectées par les capteurs d'identification et de collecte,
- au moins un module de lecture d'au moins un capteur codé,
- un module de traitement des informations collectées par les capteurs.

L'identification de la personne et des produits qu'elle manipule se fait ainsi de manière simple et fiable grâce à l'utilisation de capteurs codés. L'ensemble des informations collectées est validé également à l'aide d'un capteur codé.

Selon des aspects avantageux mais non obligatoires de l'invention, un tel dispositif peut incorporer au moins une des caractéristiques suivantes :
- Le dispositif comprend un module de stockage des données.
- Le dispositif comprend un module de transmission des données collectées.
- Les capteurs de validation sont adaptés pour valider, modifier, compléter ou annuler au moins une partie des informations collectées par les capteurs d'identification et de collecte des informations.
- Au moins un des capteurs codés utilisés est un code barre.
- Tous les capteurs codés utilisés sont des codes barres.

L'invention concerne également un procédé d'utilisation d'un dispositif selon l'une des caractéristiques précédentes **caractérisé en ce qu**'il comprend au moins des étapes consistant en :
- a) une identification, automatique ou semi automatique, de chaque personne susceptible d'être exposée, à l'aide d'un premier capteur codé,
- b) une identification, semi automatique, à l'aide d'un second capteur codé, d'un ou plusieurs produits, d'origine chimique ou biologique, utilisés par la personne identifiée lors de l'étape a),
- c) une vérification, lors de laquelle on peut valider, modifier, compléter ou annuler au moins une partie des informations collectées.

Selon des aspects avantageux mais non obligatoires, un tel procédé peut incorporer au moins une des étapes suivantes :
- lors de l'étape c), la vérification est effectuée à l'aide d'un capteur codé par la personne identifiée à l'étape a).
- Lors de l'étape b), l'identification porte sur un protocole de manipulation incluant un ou plusieurs produits en qualité et quantité prédéfinies.
- Lors de l'étape b), l'identification porte sur un seul produit donné.
- Avant l'étape a), on crée une base de données identifiant l'ensemble des personnes susceptibles d'utiliser des produits.
- Avant l'étape b), on crée une base de données regroupant l'ensemble des informations relatives à des produits choisis parmi une liste de produits prédéfinis, ainsi que les protocoles de manipulation incluant ces produits.
- Après l'étape b), une étape a) supplémentaire d'identification de la personne est réalisée.
- L'ordre de réalisation des étapes a) et b) est quelconque.

L'invention sera mieux comprise et d'autres avantages de celle-ci apparaîtront plus clairement à la lecture de la description qui va suivre d'un dispositif et d'un procédé d'utilisation du dispositif conformes à l'invention, donnée uniquement à titre d'exemple et faite en se référant aux dessins annexés dans lesquels :
- la figure 1 est une représentation schématique d'une salle équipée de postes de travail, une personne manipulant des produits étant représentée lors des différentes étapes de collecte des informations à l'aide d'un dispositif et de son procédé d'utilisation conformes à l'invention, le dispositif étant représenté schématiquement et

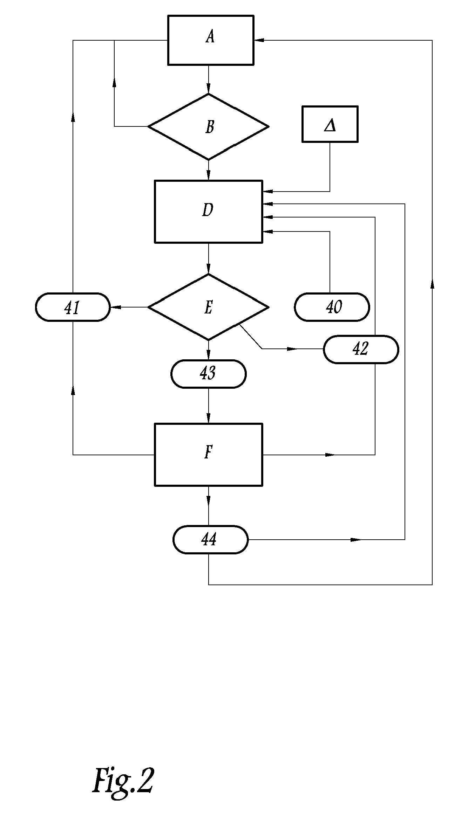

- la figure 2 est un diagramme illustrant les différentes étapes d'un procédé d'utilisation du dispositif illustré à la figure 1.

La collecte d'informations concernant l'exposition d'une ou plusieurs personnes à des produits d'origine chimique ou biologique est décrite en référence à un dispositif de collecte et de traitement des informations. L'ordre des étapes peut être différent de celui décrit, par exemple, l'identification de la personne utilisatrice des produits a lieu après l'identification des produits utilisés.

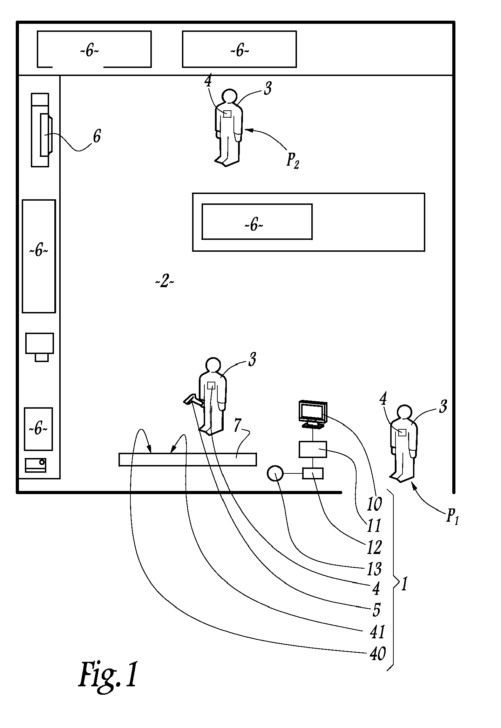

Par dispositif de collecte et de traitement des informations, on entend soit, comme illustré à la figure 1, un ensemble, dit fixe, dédié à une salle et comportant des capteurs et des modules reliés au système informatique interne de l'entreprise ou du laboratoire, soit un ensemble, dit mobile, pouvant être déplacé entre plusieurs lieux. L'utilisation d'un dispositif mobile est avantageuse dans le cas d'une intervention ponctuelle, par exemple lorsque des analyses chimiques ou biologiques sont à effectuer pendant une période donnée, relativement courte.

Un dispositif mobile peut également être utilisé pour valider des informations collectées par d'autres moyens, à titre de contrôle d'un moyen de collecte d'informations relatives à l'exposition de personnes à des produits d'origine chimique ou biologique .

A la figure 1, un dispositif fixe 1 est installé dans une salle 2 où s'effectuent des manipulations par un utilisateur 3 donné. Le dispositif 1 est, dans l'exemple, relié au système informatique de l'entreprise ou du laboratoire. La liaison est filaire ou non filaire.

Dans une première étape A, on identifie un utilisateur 3 susceptible d'être exposé aux produits utilisés pour réaliser les manipulations répertoriées dans la salle 2. Cette identification peut être faite par la saisie manuelle d'un code. Avantageusement, l'identification est automatique ou semi automatique. Pour cela, l'utilisateur 3 est porteur d'un premier capteur codé 4.

Par capteur codé, on désigne un moyen d'identification, automatique ou semi-automatique, codée, permettant de collecter l'ensemble des données nécessaires à l'identification de la personne, sans que celle-ci ou un tiers intervienne pour une saisie manuelle des données d'identification. Par automatique, on entend une identification sans action spécifique de l'utilisateur. Par exemple, il passe par un portillon ou analogue et un détecteur reconnaît un capteur. Par semi-automatique, on entend une identification où l'utilisateur effectue une action spécifique consistant à présenter son capteur devant un détecteur ou un lecteur qui reconnaît le capteur.

Avantageusement, le capteur codé utilisé est un code barre 4 imprimé sur un badge porté par l'utilisateur 3. En d'autres termes, il s'agit d'une identification semi-automatique puisque l'utilisateur présente le code barre devant un lecteur. Dans un mode de réalisation non illustré, ce capteur codé est une étiquette électronique de type RFID. Ce peut être également une puce électronique, un capteur optique, un dispositif d'identification biométrique par lecture d'empreinte digitale ou rétinienne, un dispositif de reconnaissance vocale ou tout autre moyen d'identification codé.

Pour effectuer la lecture du code barre 4, l'utilisateur 3 présente son badge devant un module de lecture 5 relié au dispositif 1. Avantageusement, il s'agit d'une poignée de lecture optique 5, mobile, connue en soi.

Les informations codées par le code barre 4 comportent, au minimum, un identifiant de l'utilisateur. Cet identifiant est répertorié dans une base de données interne de l'entreprise. A cet identifiant sont associées des informations telles que le nom et le prénom de l'utilisateur, le nom de l'entreprise à laquelle il appartient et/ou le service auprès duquel il est détaché. D'autres informations peuvent être également incluses dans l'identifiant, par exemple la date d'entrée de l'utilisateur 3 dans l'entreprise, les périodes de congés et/ou d'arrêt maladie. Il convient de réactualiser l'identifiant, tout en conservant le code barre 4, à chaque modification de la situation de la personne.

La lecture du code barre 4 d'identification génère automatiquement la mise en marche B du dispositif 1 donc la mise en oeuvre du procédé d'utilisation du dispositif. Cette mise en marche peut être visualisée éventuellement sur un écran de contrôle 10 ou par d'autres moyens, par exemple un avertisseur sonore. En cas d'identification erronée, il est possible, une fois le dispositif 1 en marche, de refaire une identification de l'utilisateur. En d'autres termes, à partir de l'étape B, il est possible de refaire une étape A.

Le code barre 4 d'identification de l'utilisateur 3 comporte avantageusement une information relative au niveau de contrôle auquel peut accéder l'utilisateur. Autrement dit, chaque utilisateur peut, dans une certaine mesure, modifier les informations collectées, le degré de modifications autorisé pouvant être variable selon les personnes.

Une authentification de l'utilisateur 3 par un capteur codé, en l'espèce un code barre, évite toute saisie manuelle et l'utilisateur n'a pas besoin de se remémorer un identifiant ou un mot de passe. En variante, il est possible d'associer le capteur codé à un identifiant. L'identifiant peut être, avantageusement, associé à un mot de passe issu, par exemple, de l'annuaire interne de l'entreprise. Dans ce cas, on limite le risque qu'une personne utilise un capteur codé dédié à une autre personne, pour autant que ce capteur ne soit pas de type biométrique.

Cette première étape d'identification s'effectue avantageusement lors de l'entrée dans la salle 2 de l'utilisateur 3, par exemple lorsqu'il est dans la position P₁, avant toute utilisation et manipulation de produits, chimique ou biologique.

Dans un mode de réalisation non illustré, l'identification de l'utilisateur s'effectue après la manipulation des produits.

En variante, l'utilisateur 3 doit s'identifier à l'entrée et à la sortie de la salle 2, c'est-à-dire avant et après une manipulation. Ceci permet d'éviter, par exemple, qu'un utilisateur effectue plusieurs manipulations sans s'identifier. Lors d'une identification à la sortie de la salle, cette identification constitue avantageusement une signature validant les informations saisies.

L'utilisateur 3 effectue, dans la salle 2, les manipulations prévues selon des protocoles et cahiers des charges prédéfinis. Lors de ces manipulations, l'utilisateur 3 se trouve, par exemple, dans la position P₂, au niveau de l'un des postes de travail 6. Lorsque plusieurs personnes sont présentes dans la salle 2, les étapes d'identification et de saisie des informations sont distinctes pour chaque personne, afin d'éviter toute interférence entre les informations collectées.

Chaque protocole concerne une manipulation, celle-ci pouvant se dérouler sur plusieurs postes de travail 6. Un protocole prend en considération tous les produits utilisés, tant du point de vue qualitatif que quantitatif, ainsi que leur mise en oeuvre.

Avantageusement, chaque protocole est ouvert, c'est-à-dire qu'une base de données, interne à l'entreprise et répertoriant les protocoles, peut être modifiée à tout moment par un gestionnaire. Ceci se produit, par exemple, lorsqu'on change le fournisseur d'un produit, lorsqu'un produit donné a des caractéristiques qui ont évolué, lorsqu'on modifie ou valide un protocole, lorsqu'on supprime une manipulation ou lorsqu'on en créée une.

La base de données répertorie également les manipulations en cours de développement et de mise au point, c'est-à-dire les manipulations pour lesquelles le protocole n'est pas encore définitif. Il n'en demeure pas moins que ces essais induisent une exposition de l'utilisateur aux produits, ils sont donc pris en compte par la méthode. Un code barre spécial peut être prévu afin d'indiquer qu'il s'agit d'un protocole en cours de validation. Ce code barre peut être associé au code barre d'un protocole proche de celui en cours de validation.

La base de données prend également en compte l'ensemble des produits, chimiques ou biologiques, utilisés de manière unitaire, hors protocole. L'utilisation d'un seul produit a lieu, par exemple, lors d'essais d'un nouveau produit. Par nouveau, on entend un produit non utilisé auparavant dans les manipulations répertoriées. Il s'agit, par exemple, d'un produit connu provenant d'un autre fournisseur et/ou avec des caractéristiques différentes.

La mise à jour et la saisie des informations concernant les produits dans la base de donnés sont réalisées lors d'une étape Δ, préalablement à la mise en oeuvre de la méthode. Cette étape Δ est réalisée, autant que faire se peut, avant qu'une manipulation soit réalisable par l'utilisateur 3. En d'autres termes, tout produit susceptible d'être mis en oeuvre à un poste de travail 6 est, au préalable, répertorié dans la base de données, de sorte que l'utilisateur 3 ne manipule que des produits référencés dans la base.

Cette étape Δ de mise à jour de la base de données est effectuée manuellement, soit par l'utilisateur, soit par un gestionnaire en charge de la base de données relative aux protocoles et aux produits testés. En variante, elle peut être réalisée en utilisant un code barre inscrit sur les emballages des produits, pour une identification semi-automatique.

Lorsque l'utilisateur 3 a fini sa ou ses manipulations, il effectue une étape D qui consiste à prendre en compte les informations relatives à son exposition aux produits manipulés. Pour cela, l'utilisateur 3 identifié lors de l'étape A, saisit à l'aide du module de lecture 5, un code barre 40. En variante, ce peut être un capteur codé d'une autre nature, par exemple un capteur optique, une puce électronique de type RFID ou un moyen de reconnaissance vocal.

Dans une salle 2 donnée, un support regroupe l'ensemble des codes barres 40 relatifs aux protocoles et produits utilisés dans cette salle. Ce support est avantageusement un tableau mural 7 situé à proximité de l'entrée de la salle 2. En variante, il s'agit d'un tableau disposé à proximité de chaque poste de travail et répertoriant le ou les code(s) barre de la ou des seule(s) manipulation(s) réalisable(s) au poste de travail concerné. Dans un mode de réalisation non représenté, le tableau est remplacé par un écran tactile.

Chaque protocole est individualisé. Ainsi, l'utilisateur 3 saisit un protocole en saisissant un code barre 40 donné. Il doit également saisir le nombre de fois où il a effectué la manipulation dans la période donnée, c'est-à-dire lors de sa présence dans la salle 2. Pour cela, soit il effectue plusieurs saisies, c'est-à-dire plusieurs passages du module de lecture 5 devant le code barre 40 relatif au protocole, soit le code barre 40 du protocole est décliné en plusieurs variantes correspondant chacune à un nombre donné d'itérations du protocole, jusqu'à un nombre maximal d'itérations de la manipulation. En variante, il y a un code barre 40 par protocole, associé à des codes barre secondaires qui correspondent chacun à un nombre donné d'itérations du protocole.

La collecte des informations s'effectue de manière semi-automatique, simplement par présentation du ou des code(s) barre devant le module de lecture 5. En variante, chaque poste de travail est équipé d'un module de lecture 5 fixe.

Comme indiqué précédemment, les informations collectées, c'est-à-dire l'identification de la personne 3 à l'étape A et les informations relatives à la manipulation des produits lors de l'étape D, peuvent être réalisées dans un ordre différent. Par exemple, ce n'est qu'après la manipulation et la lecture du code barre relatif au protocole que l'utilisateur s'identifie à l'aide d'un code barre.

Avantageusement, il est prévu que l'ensemble des informations collectées par lecture des codes barre doit être validé pour que la déclaration d'exposition de l'utilisateur aux produits soit réalisée et close. Cette validation est avantageusement effectuée par l'utilisateur 3. Pour cela, lors d'une étape E, dite de vérification, l'utilisateur 3 met en oeuvre un autre capteur codé, en l'espèce une autre série de codes barre 41 à 43.

Un code barre 41 correspond à un ordre d'annulation. Ce code barre est utilisé lorsqu'on souhaite annuler l'ensemble des informations saisies, par exemple parce qu'il y a une erreur sur l'authentification de la personne. Dans ce cas, la déclaration d'exposition aux produits est remise à zéro et il faut recommencer l'étape A d'identification de l'utilisateur, ainsi que l'étape D de collecte des données relatives aux protocoles et/ou aux produits.

Un autre code barre 42 permet de recommencer seulement la collecte des informations relatives au protocole et/ou au produit, par exemple lorsqu'il y a soit une erreur sur le protocole soit sur le nombre de manipulations effectuées. Lors de l'étape de vérification E, on peut également vérifier les informations saisies lors de l'étape Δ de mise à jour de la base de données relative aux produits et aux protocoles.

Un troisième code barre 43 indique la fin de la collecte des informations, ce qui génère, avantageusement, de la part du dispositif 1, un récapitulatif F des informations saisies afin que l'utilisateur puisse, visuellement, les vérifier une autre fois. A partir de ce récapitulatif édité à l'étape F, l'utilisateur a également la possibilité, d'effectuer une annulation totale ou de recommencer seulement la collecte des informations, à l'étape D, à l'aide respectivement des codes 41 et 42.

Un autre code barre 44 permet de valider l'ensemble de la déclaration, c'est-à-dire confirmer le récapitulatif F avant, éventuellement, l'ouverture d'une autre fiche de déclaration. Ce code barre 44 sert également de signature électronique, avantageusement lorsque l'utilisateur est identifié après la collecte des informations relatives aux produits. Si c'est un autre utilisateur 3 qui remplit la nouvelle déclaration, il effectue alors l'étape A. Si le même utilisateur remplit une nouvelle déclaration, pour une autre manipulation, il effectue alors l'étape D. Le choix peut se faire, par exemple, à l'aide de deux codes barre 44 différents ou directement par lecture d'un code barre 4 identifiant un nouvel utilisateur ou par lecture d'un code barre 40 identifiant un nouveau protocole.

Bien entendu, d'autres codes barres ou commandes supplémentaires peuvent être prévues. Dans tous les cas, l'ensemble de toutes les saisies et informations collectées lors des différentes étapes d'identification de l'utilisateur et de collecte des données relatives au protocole ainsi que les commandes de contrôle, sont gardées en mémoire dans un module de stockage des données, à savoir une mémoire électronique 11, de manière que l'on puisse contrôler l'ensemble des informations et éviter toute fraude.

Le dispositif 1 comprend également un module de traitement des informations 12. En d'autres termes, le dispositif 1 comprend un micro-ordinateur relié à un module de lecture 5 de code barre. Le module de traitement des informations 12 peut être situé à distance du module de lecture. La liaison entre les modules, filaire ou non, est assurée par un module de transmission des données 13. Le module de traitements des informations peut être configuré pour effectuer un horodatage, par exemple pour chaque information collectée, pour chaque fiche validée ou pour toute modification ultérieure de la fiche validée.

Dans un mode de réalisation non représenté, le module de traitement 12 génère des alertes signalant, par exemple, à l'utilisateur 3 qu'il a rentré n fois un protocole, ce qui n'est techniquement pas possible pendant la période donnée ou qu'il a effectué n fois une manipulation et qu'il a atteint un seuil prédéfini d'exposition à un produit dangereux.

Le dispositif 1 peut également être en relation avec un dispositif, non illustré, de gestion des stocks. Dans ce cas, le module 12 génère une alerte au niveau de la commande des produits.

On peut également prévoir une transmission des informations, par le module de transmission 13, à un gestionnaire en charge de collecter l'ensemble des informations relatives à l'exposition aux produits et situé à l'extérieur de la salle 2. Ce gestionnaire peut être interne à l'entreprise ou externe, par exemple il peut faire partie d'un organisme de prévention, de contrôle sanitaire ou de médecine du travail. Le gestionnaire peut avoir la possibilité, au moins pendant une période donnée, de modifier les informations validées. Dans tous les cas, chaque modification est gardée en mémoire et horodatée.

Dans le cas d'un dispositif 1 mobile, c'est-à-dire avec un micro-ordinateur portable relié à un module portable de lecture du code barre, on peut, à la fin de la période de collecte des informations, connecté ce dernier, par une liaison filaire de type USB ou non filaire de type WIFI, à un système informatique fixe. Ce système informatique fixe est avantageusement adapté pour recueillir des informations collectées par plusieurs dispositifs mobiles.

Il est aisé d'effectuer des études statistiques permettant d'effectuer un bilan d'exposition par entreprise, par pièce, par personne, par équipe, par poste de travail, par protocole ou par produit.

On peut, avec un tel dispositif, éditer des fiches personnalisées. Ces fiches peuvent être validées par la signature d'un responsable et/ou de l'utilisateur sur une période donnée, par exemple sur une semaine ou un jour. De telles fiches comprennent avantageusement, pour chaque personne le nom des produits auxquels elle a été exposée. Les produits sont classés, par exemple, par ordre alphabétique avec une codification du type de manipulation, c'est-à-dire si c'est une manipulation de laboratoire, une préparation d'un milieu de culture ou d'une solution. La fiche comprend également le nombre de manipulations effectuées pendant une période donnée, la quantité totale de produits à laquelle l'utilisateur a été exposée, exprimée dans une unité définie, le lieu d'exposition et s'il y a eu un accident ou un incident. Celui-ci est indiqué, par exemple, par une couleur différente au niveau de la fiche.

Ces fiches sont générées lors d'une étape ultérieure d'édition, non représentée, en se basant sur l'ensemble des informations saisies et validées par le code 44. Ces fiches sont générées au moins une fois par an, à l'occasion de la visite médical effectuée par les services de médecine du travail auprès de chaque personne de l'entreprise. Elles peuvent également être générées à la demande, par exemple lors du départ de la personne, lors de la mise en oeuvre du dispositif mobile ou après chaque journée de travail. Une nouvelle fiche peut alors être préparée soit par saisie d'un nouvel utilisateur, lors d'une nouvelle étape A, soit par collecte d'informations relatives à un autre protocole, lors d'une nouvelle étape D dans le cas d'un même utilisateur.

En cas d'incident ou de connaissance de nouveaux risques liés à l'utilisation d'un produit, ces fiches permettent de mieux définir les traitements et mesures à mettre en place pour chaque salarié et/ou entreprise en fonction des expositions effectuées et des risques encourus.

## Revendications

1. Dispositif de collecte et de traitement d'informations relatives à l'exposition d'une ou plusieurs personnes (3) à un ou plusieurs produits d'origine chimique ou biologique, comportant :
- au moins un capteur codé (4) d'identification automatique ou semi-automatique d'une personne (3) susceptible d'être exposée à au moins un produit,
- au moins un capteur codé (40) de collecte d'informations relatives à la manipulation d'au moins un produit par la personne (3) susceptible d'être exposé au produit,
- au moins un capteur (41 à 44) de validation des informations collectées par les capteurs (4, 40) d'identification et de collecte,
- au moins un module de lecture (5) d'au moins un capteur codé (4, 40 à 44),
- un module de traitement des informations (12) collectées par les capteurs (4, 40 à 44).

2. Dispositif selon la revendication 1, **caractérisé en ce qu'**il comprend un module de stockage des données (11).

3. Dispositif selon l'un des revendications précédentes, **caractérisé en ce qu'**il comprend un module de transmission des données collectées (13).

4. Dispositif selon la revendication 3, **caractérisé en ce que** les capteurs de validation sont adaptés pour valider (43, 44), modifier (42), compléter ou annuler (41) au moins une partie des informations collectées par les capteurs (4, 40) d'identification et de collecte des informations.

5. Dispositif selon l'une des revendications précédentes, **caractérisé en ce qu'**au moins un des capteurs codés utilisés est un code barre (4, 40, 41, 42, 43, 44).

6. Dispositif selon la revendication 5, **caractérisé en ce que** tous les capteurs codés utilisés sont des codes barres (4, 40 à 44).

7. Procédé d'utilisation d'un dispositif selon l'une des revendications précédentes, **caractérisé en ce qu'**il comprend au moins des étapes consistant en :
- a) une identification (A), automatique ou semi automatique, de chaque personne (3) susceptible d'être exposée, à l'aide d'un premier capteur codé (4),
- b) une identification (D), semi automatique, à l'aide d'un second capteur codé (40), d'un ou plusieurs produits, d'origine chimique ou biologique, utilisés par la personne (3) identifiée lors de l'étape a),
- c) une vérification (E), lors de laquelle on peut valider (43), modifier (42), compléter ou annuler (41) au moins une partie des informations collectées.

8. Procédé selon la revendication 7, **caractérisé en ce que**, lors de l'étape c), la vérification (E) est effectuée à l'aide d'un capteur codé (41 à 44), par la personne (3) identifiée à l'étape a).

9. Procédé selon l'une des revendications 7 ou 8, **caractérisé en ce que**, lors de l'étape b), l'identification (D) porte sur un protocole de manipulation incluant un ou plusieurs produits en qualité et quantité prédéfinies.

10. Procédé selon l'une des revendications 7 ou 8, **caractérisé en ce que**, lors de l'étape b), l'identification (D) porte sur un seul produit donné.

11. Procédé selon l'une des revendications 7 à 10, **caractérisé en ce qu'**avant l'étape a), on crée (Δ) une base de données identifiant l'ensemble des personnes susceptibles d'utiliser des produits.

12. Procédé selon l'une des revendications 7 à 11, **caractérisé en ce qu'**avant l'étape b), on crée une base de données regroupant l'ensemble des informations relatives à des produits choisis parmi une liste de produits prédéfinis, ainsi que les protocoles de manipulation incluant ces produits.

13. Procédé selon l'une des revendications 7 à 12, **caractérisé en ce qu'**après l'étape b), une étape a) supplémentaire d'identification de la personne (3) est réalisée.

14. Procédé selon l'une des revendications 7 à 13, **caractérisé en ce que** l'ordre de réalisation des étapes a) et b) est quelconque.
